# EUROPÄISCHE PATENTANMELDUNG

(11) **EP 4 375 869 A1**
(43) Veröffentlichungstag der Anmeldung: **29.05.2024**
(21) Anmeldenummer: 22209730.5
(22) Anmeldetag: 25.11.2022
(51) Int. Cl.: G06F 30/323, G06F 30/327, G06F 30/3308, G06F 30/343, G06F 117/08

(54) **VERFAHREN ZUM ERSTELLEN UND BEREITSTELLEN EINES FPGA BUILD RESULTS EINES FPGA-MODELLS**

(71) Anmelder: dSPACE GmbH, 33102 Paderborn (DE)
(72) Erfinder: Lubeley, Dominik, 33102 Paderborn (DE); Kronmüller, Martin, 33102 Paderborn (DE); Puschmann, Frank, 33102 Paderborn (DE); Hagendorf, Jörg, 33102 Paderborn (DE)

(57) **Zusammenfassung**

Die Erfindung betrifft ein Verfahren zum Erstellen und Bereitstellen eines FPGA Build Results eines FPGA-Modells (1) mit wenigstens einer FPGA-Gesamtfunktionalität (2), mit folgenden Verfahrensschritten:
a) Kennzeichnen des FPGA-Untersystems (5), wobei mittels des FPGA-Untersystems (5) die FPGA-Funktionalität eines FPGA-Modells (1) konfigurierbar ist,
b) Kennzeichnen des Vorskalierungs-Untersystems (6) und des Nachskalierungs-Untersystems (7) eines FPGA-Modells (1) zur Ausführung auf einem Prozessor,
c) Kennzeichnen von internen und externen Schnittstellen in dem Vorskalierungs-Untersystem (6) und Nachskalierungs-Untersystem (7), wobei die internen Schnittstellen einen Datenfluss innerhalb des FPGA-Modells (1) und die externen Schnittstellen einen Datenfluss von dem FPGA-Modell (1) weg gewährleisten,
d) Generieren der FPGA-Gesamtfunktionalität (2),
e) Generieren des FPGA Build Results anhand der generierten FPGA-Gesamtfunktionalität (2), wobei das FPGA Build Result eine einzelne Gesamtcontainer-Datei umfasst,
f) Bereitstellen des FPGA Build Results an eine weitere Anwendung zum Bestimmen einer Funktionalität eines das FPGA-Modell (1) und das Prozessormodell (3) umfassendes Gesamtmodell (4).

Auf diese Weise wird ein Verfahren zum Modellieren eines FPGA Build Results bereitgestellt, das zu einem einheitlichen FPGA-Modell (1) führt und somit die Weiterverwendung des FPGA-Build Results sicher und einfach gestaltet werden kann.

## Beschreibung

Die Erfindung betrifft ein Verfahren zum Erstellen und Bereitstellen eines FPGA Build Results eines FPGA-Modells mit wenigstens einer FPGA-Gesamtfunktionalität.

Ein FPGA ist ein integrierter Schaltkreis der Digitaltechnik, in den eine logische Schaltung geladen werden kann. Im Unterschied zur Programmierung von Computern, Mikrocontrollern und Steuerungen meint der Begriff "Programmierung" bzw. "Bauen des FPGA" bei FPGAs nicht nur die Vorgabe zeitlicher Abläufe, sondern auch die Definition der angestrebten Schaltungsstruktur. Diese Schaltungsstruktur wird mittels einer Hardware-Beschreibungssprache formuliert und dann softwaremäßig in eine Konfigurationsdatei übersetzt, die vorgibt, wie die Elemente im FPGA verschaltet werden sollen. Bei der FPGA-Programmierung erzeugt man also eine Beschreibung der Hardware-Struktur, die dann mit Hilfe von Synthese- und Routing-Werkzeugen auf den eigentlichen FPGA übertragen wird.

Diese Hardware-Beschreibung findet typischerweise in speziellen Sprachen, wie VHDL oder Verilog statt. Anstelle von "FPGA-Programm" spricht man dabei deshalb auch von einer "FPGA-Konfiguration". Im Gegensatz zur Programmierung von Computern, Mikroprozessoren und Steuerungen richtet sich die FPGA-Programmierung somit nicht an einem vorgegebenen Betriebssystem und einer Treiberbasis aus. Stattdessen zielt die FPGA-Programmierung auf die Definition von Strukturen im Halbleiter ab, die später die beabsichtigten Funktionen ausführen. Auf diese Weise ist ein Spezialisierungs- und Parallelitätsgrad erzielbar, der von herkömmlichen, vorgefertigten Mikroprozessoren nur schwer zu erreichen ist.

Im Bereich der Hardware in the Loop-Simulation (HIL-Simulation) und bei Rapid Control Prototyping-Systemen (RCP-Systemen) können Echtzeitsimulationen, zum Beispiel in den technischen Bereichen Leistungselektronik und Elektromobilität, schon längere Zeit nicht mehr durch reine Prozessormodelle abgedeckt werden. Bei vielen Anwendungsfällen, wie Simulationen, in denen sehr schnelle Regelkreise erforderlich sind, müssen diese durch FPGA-Modelle ergänzt oder gar ersetzt werden. Derartige Hardware für HIL-Simulationen und bei Rapid Control Prototyping-Systemen verfügen über eine Vielzahl von FPGAs für unterschiedliche Funktionalitäten bzw. Schaltungskomponenten, beispielsweise FPGAs für eine Kommunikation in einem Echtzeitnetzwerk und FPGAs, welche unterschiedliche I/O Funktionalitäten auf I/O Kanälen realisieren können.

Mittels abstrahierender FPGA-Entwicklungsumgebungen können Nutzer auch ohne detaillierte Kenntnisse eines FPGAs und Toolflows eigene Hardware entwickeln. Im Bereich des Rapid Control Prototyping (RCP) können schnelle Regelkreise auf dem FPGA entworfen und beispielsweise auf einem Hardware Board als Prototypen-Steuergerät betrieben werden. Mit den steigenden Anforderungen an schnelle Regelkreise beispielsweise im E-Drive Umfeld, in der Leistungselektronik oder bei der Motorsteuerung werden immer leistungsfähigere FPGAs benötigt.

Eine Echtzeitapplikation beispielsweise für eine E-Drive oder Leistungselektronik HIL-Simulation besteht in der Regel aus einem langsamen Modellanteil, dem sogenannten Verhaltensmodell, das auf dem Prozessor läuft, und einem schnellen Modellanteil, beispielsweise einem schnellen Regelkreis mit direkter I/O Kopplung, der auf dem FPGA läuft. Der Datenaustausch zwischen Prozessor und FPGA-Modell erfolgt dabei insbesondere über ein FPGA Register-, Buffer- oder Bus-Interface.

Häufig erstellen Anwender in FPGA Modellierungs-Abteilungen FPGA-Build Results zur Weiterverwendung in Prozessor-Modellierungsabteilungen. Aus Kombination von FPGA Build Result und dem Prozessormodell entstehen dort Echtzeitapplikationen für HIL-Simulatoren.

Oft müssen die Daten von und zum FPGA auf dem Prozessor noch aufbereitet werden, da bestimmte Funktionen auf dem FPGA beispielsweise zu viele Ressourcen benötigen würden. Wir sprechen dabei von Vorskalierung und Nachskalierung (engl. Pre- und Postprocessing oder Scaling).

Das bedeutet, dass herkömmlicherweise neben dem FPGA Build Result ein Übergabeergebnis für eine FPGA Gesamtfunktionalität zusätzlich aus einem Pre- und Postprocessing Prozessormodell-Anteil besteht, den der Anwender in jedes seiner Prozessormodelle kopieren muss, um korrekt mit dem FPGA-Modell interagieren zu können. Dabei sind die Modelle zwischen FPGA und Prozessor partitioniert. Sobald ein Anteil des FPGA-Modells auf den Prozessor geschoben wird, ist es Bestandteil des Prozessormodells und somit losgelöst vom FPGA-Build Result. Das macht den Verkauf von FPGA-Solutions und Austausch von FPGA-Build Results bei Anwendern kompliziert und fehleranfällig.

Davon ausgehend ist es die Aufgabe der Erfindung, ein Verfahren zum Modellieren eines FPGA Build Results bereitzustellen, das zu einem einheitlichen FPGA-Modell führt und somit die Weiterverwendung des FPGA-Build Results sicher und einfach gestaltet werden kann.

Diese Aufgabe wird durch den Gegenstand des Patentanspruchs 1 gelöst. Bevorzugte Weiterbildungen finden sich in den Unteransprüchen.

Erfindungsgemäß ist somit ein Verfahren zum Erstellen und Bereitstellen eines FPGA Build Results eines FPGA-Modells mit wenigstens einer FPGA-Gesamtfunktionalität vorgesehen, wobei die FPGA-Gesamtfunktionalität ein FPGA-Untersystem, ein Vorskalierungs-Untersystem und ein Nachskalierungs-Untersystem umfasst, mit folgenden Verfahrensschritten:
a) Kennzeichnen des FPGA-Untersystems, wobei mittels des FPGA-Untersystems die FPGA-Funktionalität eines FPGA-Modells konfigurierbar ist,
b) Kennzeichnen des Vorskalierungs-Untersystems und des Nachskalierungs-Untersystems eines FPGA-Modells zur Ausführung auf einem Prozessor,
c) Kennzeichnen von internen und externen Schnittstellen in dem Vorskalierungs-Untersystem und Nachskalierungs-Untersystem, wobei die internen Schnittstellen einen Datenfluss innerhalb des FPGA-Modells und die externen Schnittstellen einen Datenfluss von dem FPGA-Modell weg gewährleisten,
d) Generieren der FPGA-Gesamtfunktionalität,
e) Generieren des FPGA Build Results anhand der generierten FPGA-Gesamtfunktionalität, wobei das FPGA Build Result eine einzelne Gesamtcontainer-Datei umfasst,
f) Bereitstellen des FPGA Build Results an eine weitere Anwendung zum Bestimmen einer Funktionalität eines das FPGA-Modell und das Prozessormodell umfassendes Gesamtmodells.

Es ist somit ein maßgeblicher Punkt der Erfindung, dass die FPGA-Gesamtfunktionalität zusammenhängend im FPGA-Modell modelliert wird. Das Vorskalierungs-Untersystem und das Nachskalierungs-Untersystem werden zusammen mit den internen und externen Schnittstellen markiert und zu der FPGA-Gesamtfunktionalität des FPGA-Modells hinzugefügt. Auf diese Weise wird unabhängig von dem Prozessormodell ein einheitliches FPGA Build Result erzeugt, dass eine sichere und weniger fehleranfällige Weiterverwendung des FPGA Build Results für nachgelagerte Anwendungen gewährleistet. Die nachgelagerten Anwendungen können insbesondere Modellierungen eines Gesamtsystems aus FPGA-Modell und Prozessormodell sein. Unter Prozessormodell wird dabei ein vom Anwender modellierbares Prozessorverhaltensmodell verstanden. Das erfindungsgemäße Verfahren erlaubt es, ein FPGA Build Result zu erstellen, das mit beliebigen anwenderspezifischen Prozessormodellen sicher und einfach funktioniert.

Ist vorliegend die Rede von einem FPGA-Untersystem, sind damit die Blöcke des FPGA-Modells gemeint, die nicht zu den Skalierungssystemen zählen, sondern die Funktionalität des FPGAs bestimmen. Diese können, müssen jedoch nicht zwangsweise, in einem Untersystem des FPGA-Modells verkapselt sein.

Ist vorliegend die Rede von einem Datenfluss innerhalb des FPGA-Modells, ist damit insbesondere ein Datenfluss zwischen den Skalierungs-Untersystemen und dem FPGA-Untersystem gemeint. Ein Datenfluss von dem FPGA-Modell weg beschreibt insbesondere einen Datenfluss vom FPGA-Modell zu einem mit dem FPGA-Modell verbindbaren Prozessormodell bzw. einen Datenaustausch zwischen dem FPGA-Modell und einem verbindbaren Prozessormodell.

Das Kennzeichnen der Untersysteme erfolgt vorzugsweise GUI-gestützt mittels Markierens von Datenstrukturen manuell oder über eine graphische Benutzeroberfläche. Gemäß einer bevorzugten Weiterbildung der Erfindung umfasst das Generieren der FPGA-Gesamtfunktionalität folgenden Verfahrensschritt:
A) Durchführen wenigstens eines Konsistenzchecks des Vorskalierungs-Untersystems und des Nachskalierungs-Untersystems.

Der Konsistenzcheck wird durchgeführt, um eine falsche Modellierung auszuschließen. Vorzugsweise erfolgt der Konsistenzcheck nach folgendem Schema:

| | |
|---|---|
| Konsistenzcheck #1: | FPGA-Setup-Block im FPGA-Model |
| Konsistenzcheck #2: | Ordnungsgemäß konfigurierte Untersysteme |
| Konsistenzcheck #3: | Kein Skalierungs-Untersystem innerhalb eines anderen Skalierungs-Untersystem |
| Konsistenzcheck #4: | Keine FPGA-Funktion einer FPGA-Gesamtfunktionalität im Untersystem einer anderen FPGA-Gesamtfunktionalität. |
| Konsistenzcheck #5: | Skalierungs-Untersysteme dürfen nicht mit verschiedenen FPGA-Funktionen verbunden sein |
| Konsistenzcheck #6: | Verhindern mehrerer Skalierungs-Untersysteme pro FPGA-Gesamtfunktionalität mit identischen Registergruppen-IDs, da sie nicht mit verschiedenen Tasks verbunden sein dürfen. |
| Konsistenzcheck #7: | Mehrere Skalierungs-Untersysteme pro FPGA- Gesamtfunktionalität mit unterschiedlichen Registergruppen-IDs sind zulässig, da sie mit unterschiedlichen Tasks verbunden werden dürfen. |

Als FPGA-Funktion wird dabei vorzugsweise der FPGA-Anteil, insbesondere gekennzeichnet als ein FPGA-Untersystem, einer FPGA-Gesamtfunktionalität verstanden.

Gemäß einer bevorzugten Weiterbildung der Erfindung umfasst das Generieren der FPGA-Gesamtfunktionalität folgende Verfahrensschritte:
B) Generieren eines FPGA-Bitstroms für das FPGA-Untersystem,
C) pro Skalierungs-Untersystem Generieren eines Skalierungs-Prozessorcodes, und
D) Inkludieren des FPGA-Bitstroms und der Skalierungs-Prozessorcodes jeweils als Subcontainer-Datei in der Gesamtcontainer-Datei des FPGA Build Results.

Die Subcontainer-Datei eines Skalierungs-Untersystems umfasst dabei gemäß einer bevorzugten Weiterbildung der Erfindung den Skalierungs-Prozessorcode, eine Daten-Interface Beschreibung und/oder Make Files.

Die FPGA-Gesamtfunktionalität wird dabei vorzugsweise automatisch generiert. Unter "automatisch" wird vorliegend die automatische Abfolge mehrerer Verfahrensschritte nach Auslösen dieser Automatik verstanden. Somit wird dem Anwender ein 1-Klick Build für das FPGA-Modell bereitgestellt. Mit nur einem Klick wird das FPGA Build Result aufgebaut. Die Automatik erfolgt dabei dadurch, dass die Subsysteme zuvor entsprechend gekennzeichnet wurden, sodass das Vorskalierungs-Untersystem und das Nachskalierungs-Untersystem identifizierbar sind.

Der Prozessorcode wird insbesondere dann generiert, wenn die oben genannten Konsistenzregeln eingehalten wurden. Für jedes einzelne Skalierungs-Untersystem wird zunächst ein Skalierungs-Prozessorcode in dem Modellierungsprogramm, beispielsweise Simulink, mithilfe eines Codegenerators, beispielsweise Simulink Coder von The MathWorks^{®}, generiert. Gemäß einer bevorzugten Weiterbildung der Erfindung umfasst der Skalierungs-Prozesssorcode einen unkompilierten C-Code bzw. C++-Code oder einen kompilierter Objektcode. Der C/C++-Code hat den Vorteil, dass sowohl ARM Prozessoren als auch X86 Prozessoren mit demselben FPGA-Board nutzbar sind.

Für die Codegenerierung wird insbesondere ein Skalierungs-Untersystem zunächst in ein neues Modell separiert und dieses auf "Fixed-step" und "Ensure sample time independent" konfiguriert. Dadurch ist das Skalierungs-Untersystem später mit verschiedenen Task-Perioden ausführbar. Diese Einstellung limitiert die Auswahl an Simulink Bibliotheksblöcken geringfügig, ein Integrator Block ist z.B. nicht verwendbar, da dieser nicht sample time independent ist.

Die Daten-Interface Beschreibung wird vorzugsweise im XML-Format angegeben. Diese beispielsweise <scaling_subsystem_name>_datainterfaces.XML genannte Datei wird anhand der Kennzeichnung von internen und externen Interfaces erstellt. Dadurch wird festgehalten, welche Ports extern als Anwenderinterface dienen werden und welche Ports intern mit dem FPGA-Modell kommunizieren. Insbesondere umfasst die Daten-Interface-beschreibung auch Definitionen der Parameter, Variablen und Zustände. Zustände sind Variablen, von denen das Ergebnis des Folgeschritts der Simulation abhängt.

Der FPGA-Code hingegen ist vorzugsweise fertig synthetisiert, für den spezifischen FPGA gemappt und als Konfigurations-Bitstrom hinterlegt. Dies hat den Vorteil, dass dieser zeitintensive Vorgang bereits abgeschlossen ist und der Anwender des FPGA Build Results weder die Zeit noch die dazu notwendigen FPGA-Tools aufbringen muss. Dieser FPGA-Bitstrom bestimmt die Funktionalität des FPGAs.

Gemäß einer bevorzugten Weiterbildung der Erfindung umfasst das Generieren des FPGA-Bitstroms folgende Verfahrensschritte:
I) Generieren eines Codes einer vorbestimmten Hardwarebeschreibungssprache, insbesondere eines VHDL-Codes, aus dem FPGA-Modell,
II) Synthetisieren eines Codes der vorbestimmten Hardwarebeschreibungssprache, insbesondere eines VHDL-Codes, aus einem FPGA-Anwendermodell zum Erhalten einer anwendermodellspezifischen Netzliste,
III) Synthetisieren eines FPGA-Frameworks,
IV) Hinzufügen der anwendermodellspezifischen Netzliste zu dem synthetisierten FPGA-Framework,
V) Implementieren des die anwendermodellspezifischen Netzliste umfassenden FPGA-Frameworks und Generieren des FPGA-Bitstroms.

Der Terminus VHDL-Code bezeichnet Code in einer Hardwarebeschreibungssprache, ausgeschrieben Very High Speed Integrated Circuit Hardware Description Language, auch VHSIC Hardware Description Language genannt, ist dem Fachmann als eine Hardwarebeschreibungssprache bekannt, mit der es möglich ist, digitale Systeme textbasiert zu beschreiben. VHDL ist seit 1987 als IEEE-Standard festgelegt und weist gegebenenfalls ebenso standardisierte Spracherweiterungen auf.

Die Hardwarebeschreibungssprache, wie beispielsweise VHDL oder Verilog, kann die gesamte Funktion der FPGA-Schaltung in Form von Strukturen und Abläufen beschreiben und darüber die FPGA-Konfiguration erstellen. Ein sogenanntes Synthesewerkzeug führt diese Beschreibung wie ein Programm aus und erstellt in mehreren Schritten für einen gewünschten FPGA eine spezifische Netzliste unter Nutzung der in diesem FPGA verfügbaren Ressourcen.

Gemäß einer bevorzugten Weiterbildung der Erfindung weist die Gesamtcontainer-Datei Metadaten, den FPGA-Bitstrom, eine Interface-Beschreibung zum Spezifizieren von Verbindungen der Interfaces und die Subcontainer der Skalierungs-Untersysteme auf.

Zusätzlich zum FPGA-Bitstrom wird folglich eine Interface-Beschreibung, vorzugsweise im XML-Format, generiert. Die Interfache-Beschreibung, beispielsweise customfunction.xml genannt, gibt an welche Interfaces benutzt wurden. Dazu wird zusätzlich zu einem FPGA Interface Block hinterlegt, ob und wenn ja, welche Verbindung (Block Connection) er zu einem Modell Port Block in einem Skalierungs-Untersystem hat. Als Model Port Blöcke werden vorzugsweise Interface Blöcke von Prozessormodellen verstanden.

Erfindungsgemäß ist weiterhin die Verwendung eines mittels des oben beschriebenen Verfahrens erstellten FPGA Build Results für eine weitere Anwendung zum Bestimmen einer Funktionalität eines das FPGA-Modell und ein Prozessormodell umfassendes Gesamtmodells vorgesehen. Es ist also ein wesentlicher Punkt der Erfindung, dass das FPGA Build Result nicht direkt zum Ausführen einer HIL-Simulation bereitgestellt wird. Vielmehr wird es an eine weitere Anwendung bereitgestellt, mit der der Simulator zur Ausführung des Gesamtmodells eingerichtet werden. Das Gesamtmodell umfasst dabei das FPGA-Modell und das vom Anwender modellierbare Prozessormodell. Dadurch, dass die Skalierungs-Untersysteme Teil des FPGA Build Results sind, wird ein einfaches und weniger fehleranfälliges Interface in Richtung des Prozessormodells bereitgestellt.

Die zweite Anwendung kann vorzugsweise ein intuitives, grafisches Konfigurations- und Implementierungswerkzeug sein, das sich ideal für kleine Rapid-Control-Prototyping (RCP)-Entwicklungen bis hin zu großen HIL-Tests auf Basis von Echtzeit-Hardware eignet einschließlich der Implementierung von Verhaltensmodellen und I/O-Funktionscode. Die Gesamtcontainer-Datei des FPGA Build Results wird durch die zweite Anwendung unterstützt.

Dabei wird beim Build der gesamten Echtzeitapplikation bestehend aus Prozessormodell und FPGA-Gesamtfunktionalität zusätzlich ein Glue-Code generiert. Als Glue Code wird vorliegend ein Programmcode verstanden, der keinerlei Funktionalität zum Erreichen der Programmziele beiträgt, sondern ausschließlich dem "Zusammenkleben" verschiedener Teile des Programmcodes dient, die sonst nicht kompatibel wären.

Dieser Glue-Code kann insbesondere automatisch mit Information aus einer <scaling_sub-system>_datainterfaces.XML Beschreibungsdatei und der Beschreibung des FPGA-Anteils (Custom Function.xml), welche der FPGA-Interfaces verwendet werden, und ob diese auf die Interfaces der Skalierungs-Untersysteme referenzieren, generiert werden. Dieser Glue-Code ruft das Skalierungs-Untersystem vor der Task für alle Input Ports und nach der abgeschlossenen Task für alle Output Ports zusammen auf.

Parameter, Variablen und Zustände des Skalierungs-Untersystems werden in der Initphase als multiinstanzfähige Variablen angelegt, ein Aufruf erfolgt performant über Pointer auf die Datenstrukturen, um Kopieroperation zu vermeiden. Bevorzugt sind sowohl die Beschreibung des FPGA-Anteils (Custom Function.xml), welche der FPGA-Interfaces verwendet werden als auch die Skalierungs-Untersysteme multiinstanzfähig.

Ferner ist es vorzugsweise vorgesehen, dass für jeden der in der zweiten Anwendung sichtbaren Data Ports Init Werte angegeben werden. Dieses wird in der Init-Phase des Simulators zum Prozessormodell bzw. zum Skalierungs-Untersystem geschrieben.

Nachdem der Glue-Code generiert wurde, werden alle Codeanteile der Echtzeitapplikation kompiliert, um anschließend auf einem HIL-Simulator geladen und ausgeführt werden zu können.

Erfindungsgemäß ist weiterhin ein FPGA-Modell mit wenigstens einer FPGA-Gesamtfunktionalität für ein das FPGA-Modell und ein Prozessormodell umfassendes Gesamtmodell zum Bestimmen einer Funktionalität des Gesamtmodells vorgesehen, die FPGA-Gesamtfunktionalität aufweisend
ein mehrere Logikzellen umfassendes FPGA-Untersystem zum Bestimmen der FPGA-Funktion,
ein Vorskalierungs-Untersystem zum Vorverarbeiten mindestens eines von dem Prozessormodell für das FPGA-Untersystem bereitgestellten Datensignals, und
ein Nachskalierungs-Untersystem zum Vorverarbeiten mindestens eines von dem FPGA-Untersystem für das Prozessormodell bereitgestellten Datensignals.

Die FPGA-Funktionen werden durch das FPGA-Untersystem gewährleistet. Das FPGA-Untersystem umfasst die internen Logikzellen. Die konfigurierbaren Logikblöcke (CLBs) sind über Schaltkästen miteinander verbunden. Die externe Verbindung wird durch I/O-Pins realisiert. Bei mehreren Gesamtfunktionalitäten weist jede Gesamtfunktionalität ein FPGA-Untersystem, ein Vorskalierungs-Untersystem und ein Nachskalierungs-Untersystem auf.

Vorliegend ist mit Skalieren ein Vorverarbeiten gemeint. Das Vorverarbeiten kann insbesondere das Modellieren von Operatoren, Offsetkorrekturen und/oder das Konvertieren von Datentypen umfassen.

Es ist also ein wesentlicher Punkt der Erfindung, dass die komplette Gesamtfunktionalität inkl. Vor- und Nachskalierungs-Untersystem im FPGA-Modell modelliert und paketiert werden kann.

Dadurch ergeben sich eine Vielzahl von Vorteilen: Zum einen wird damit die Modellierung von komplexen Funktionen aus verschiedenen Domänen, wie beispielsweise FPGA, Prozessor, etc., die zu einem einzigen in sich konsistentem FPGA Build Result führen, gewährleistet. Zum anderen wird es mit dem erfindungsgemäßen FPGA-Modell ermöglicht, dass die FPGA- und Prozessoranteile der ersten Anwendung, wie beispielsweise Simulink, in der weiterverarbeitenden zweiten Anwendung zur Konfiguration bzw. Implementierung des Gesamtmodells zusammenpassen, vereinfacht dargestellt werden können und somit Fehler durch den Anwender vermieden werden können. Ferner wird es ermöglicht, dass trotz interner Änderungen der Interaktion der verschiedenen Domänen (FPGA, Prozessor, etc.) die in einer ersten Anwendung modelliert werden, das externe Interface in der weiterverarbeitenden zweiten Anwendung stabil bleibt.

Das Gesamtmodell umfassend das FPGA-Modell inklusive der Skalierungs-Untersysteme sowie das optionale Prozessormodell ist insbesondere in Simulink vorzugsweise durchgängig für eine Offlinesimulation ausgestaltet.

Die Aufgabe wird weiterhin gelöst durch ein nichtflüchtiges, computerlesbares Speichermedium mit darauf abgespeicherten Befehlen, die bei ihrer Ausführung auf einem Prozessor ein zuvor beschriebenes Verfahren bewirken.

Das oben beschriebene Verfahren, FPGA-Modell und/oder die Verwendung des FPGA Build Results kann ebenfalls auf andere Systeme übertragen werden. Das Prinzip kann insbesondere auf System on Chips (SoC) anstatt reine FPGAs, GPU-Boards, DSP-Boards, AI-Boards, etc. übertragen werden. Zudem kann das Prinzip auf komplexe I/O-Funktionen übertragen werden.

Anstelle per Prozessorbus intern mit einem FPGA-Board zu kommunizieren, kann ein Skalierungsmodell, das auf dem Prozessor läuft, auch mit einem Standard I/O Board kommunizieren. Die Standard I/O Funktionalität dort, beispielsweise Pulsweitenmodulation (PWM), Wavetable Out, etc., kann aus einem festen Firmwarestand entstammen, aber z.B. parametrisierbar, oder gar komplett rekonfigurierbar sein. Mit anderen Worten: Vorskalierungs-Untersysteme und Nachskalierungs-Untersysteme können mit jeglicher anderen Art kombiniert werden, um somit aus einfachen simplen I/O Funktionen in Kombination mit Vorskalierungs- und Nachskalierungs-Modellen ein Build Result zu erzeugen, dass eine komplexe I/O Funktion anbietet, die von einer zweiten Anwendung, insbesondere einer Konfigurations- und Implementierungssoftware weiterverarbeitet werden kann.

Erfindungsgemäß ist ferner ein Verfahren zum Betreiben eines Simulationssystems zum Testen eines Testobjektes vorgesehen, das Simulationssystem aufweisend einen Echtzeitrechner, einen FPGA und einen Bedienrechner, wobei der Echtzeitrechner ein Prozessormodell simuliert und der FPGA ein oben beschriebenes FPGA-Modell, erstellt nach dem oben beschriebenen Verfahren, simuliert.

Nachfolgend wird die Erfindung anhand eines bevorzugten Ausführungsbeispiels unter Bezugnahme auf die Zeichnungen weiter im Detail erläutert.

In den Zeichnungen zeigen
- Fig. 1: schematisch ein Verfahren zum Erstellen und Bereitstellen eines FPGA Build Result gemäß einem bevorzugten Ausführungsbeispiel der Erfindung,
- Fig. 2: schematisch ein FPGA-Modell gemäß einem bevorzugten Ausführungsbeispiel der Erfindung,
- Fig. 3a-3g: schematische Anwendungsbeispiele eines Verfahrens zum Erstellen und Bereitstellen eines FPGA Build Result gemäß einem bevorzugten Ausführungsbeispiel der Erfindung,
- Fig. 4: schematisch ein Gesamtsystem gemäß einem bevorzugten Ausführungsbeispiel der Erfindung.

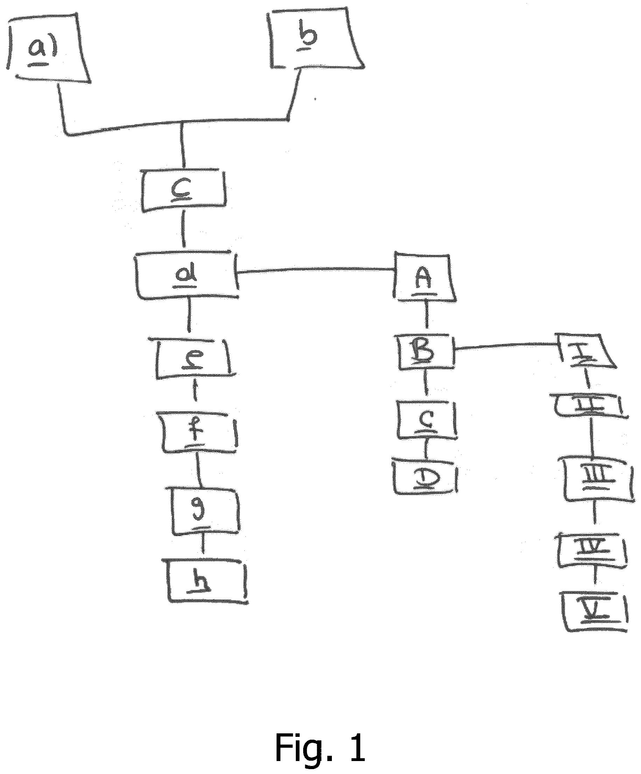

Aus Fig. 1 ist schematisch ein Verfahren zum Erstellen und Bereitstellen eines FPGA Build Result gemäß einem bevorzugten Ausführungsbeispiel der Erfindung ersichtlich. Zuerst werden in den Schritten a) und b) das FPGA-Untersystem 5, das Vorskalierungs-Untersystem 6 und das Nachskalierungs-Untersystem 7 gekennzeichnet. Das FPGA-Untersystem 5 bestimmt die eigentliche FPGA-Funktionalität des FPGA-Modells 1. Die Skalierungs-Untersysteme 6, 7 können die Datensignale vom Prozessormodell 3 bzw. zum Prozessormodell 3 vorverarbeiten.

Anschließend werden in Schritt c) die internen und externen Schnittstellen in den Skalierungs-Untersystemen 6, 7 gekennzeichnet. Die internen Schnittstellen gewährleisten einen Datenfluss innerhalb des FPGA-Modells 1 in oder aus Richtung des FPGA-Untersystems 5 und die externen Schnittstellen gewährleisten einen Datenfluss vom FPGA-Modell weg hin zum Prozessormodell 3 oder umgekehrt.

Ausgehend von den Kennzeichnungen in Schritt a), b) und c) wird in einem anschließenden Schritt d) die FPGA-Gesamtfunktionalität 2 generiert. Dazu wird als ersten in Schritt A ein Konsistenzscheck der gekennzeichneten Skalierungs-Untersysteme 6, 7 durchgeführt, um Fehler in der Modellierung zu verhindern. Danach wird in Schritt B der FPGA-Bitstrom für das FPGA-Untersystem 5, bzw. alle im FPGA-Modell 1 vorhandenen FPGA-Untersysteme, generiert. Der FPGA-Bitstrom wird mittels der Schritte I bis V generiert. Dazu wird ein VHDL-Code aus dem FPGA-Modell 1 generiert und ein Code aus dem konkreten FPGA-Anwendermodell synthetisiert, sodass eine anwenderspezifische Netzliste bereitgestellt wird. Anschließend wird das FPGA-Framework synthetisiert und die anwenderspezifische Netzliste zu dem FPGA-Framework hinzugefügt. Abschließend wird das FPGA-Framework implementiert und daraus der FPGA-Bitstrom generiert.

Nachdem der FPGA-Bitstrom generiert wurde, wird in Schritt C für jedes Skalierungs-Untersystem 6, 7 ein Skalierungs-Prozessorcode generiert und ebenso wie der FPGA-Bitstrom als Subcontainer-Dateien in einer Gesamtcontainer-Datei des FPGA Build Results inkludiert D, e. Das FPGA Build Result besteht folglich aus einer einzelnen Gesamtcontainer-Datei und enthält sowohl Daten zum FPGA-Untersystem 5 als auch zu den Skalierungs-Untersystemen 6, 7.

Anschließend wird im Schritt f das FPGA Build Result an eine weitere Anwendung bereitgestellt. Über diese weitere Anwendung wird die Funktionalität des Gesamtmodells 4 bestehend aus FPGA-Modell 1 und Prozessormodell 3 für eine HIL-Simulation konfiguriert und implementiert.

Für die HIL-Simulation wird in Schritt g ein Glue-Code erzeugt. In Schritt h werden die Codeanteile kompiliert, auf einen HIL-Simulator geladen und auf dem HIL-Simulator ausgeführt.

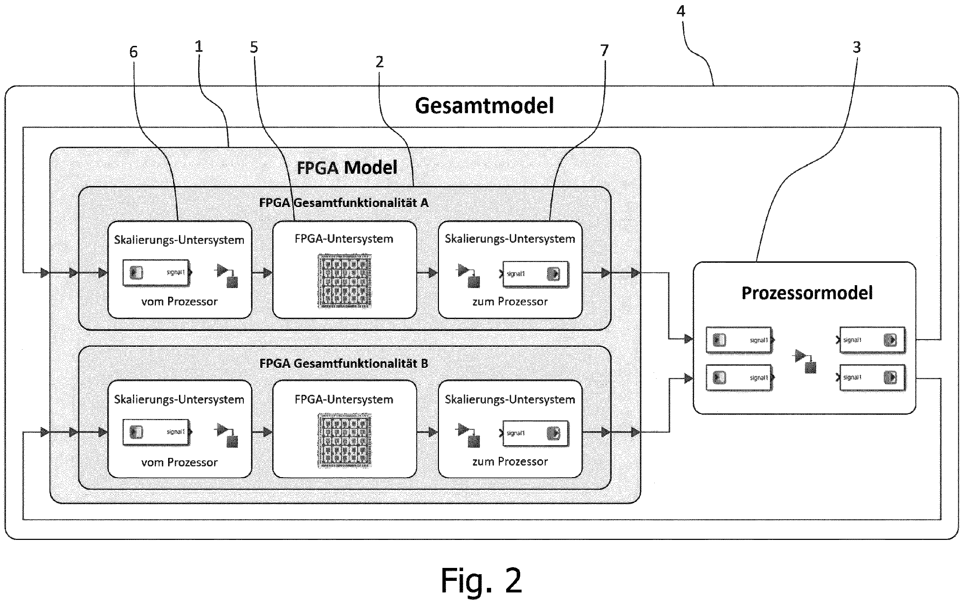

Fig. 2 zeigt ein FPGA-Modell 1 gemäß einem bevorzugten Ausführungsbeispiel der Erfindung. Im Gesamtmodell 4 befindet sich das FPGA-Modell 1 (links), und optional ein Prozessormodell 3 (rechts). Vor der Erfindung musste ein notwendiges FPGA Vorskalierungs- und Nachskalierungssystem in diesem Prozessormodell umgesetzt werden, die entsprechenden Prozessormodellanteile mussten aus dem Prozessormodell kopiert und in allen Anwendermodellen, die das FPGA-Board verwenden, eingefügt bzw. ersetzt werden. Mit dem FPGA Vor- und Nachskalierungssystem können diese Prozessoranteile nun innerhalb des FPGA-Modells 5 als sogenannte Vorskalierungs-Untersystem 6 und Nachskalierungs-Untersystem 7 mit modelliert werden. In Fig. 2 sind exemplarisch zwei FPGA Gesamtfunktionalitäten 2 A und B mit den neuen optionalen Skalierungs-Untersystemen 6, 7 dargestellt.

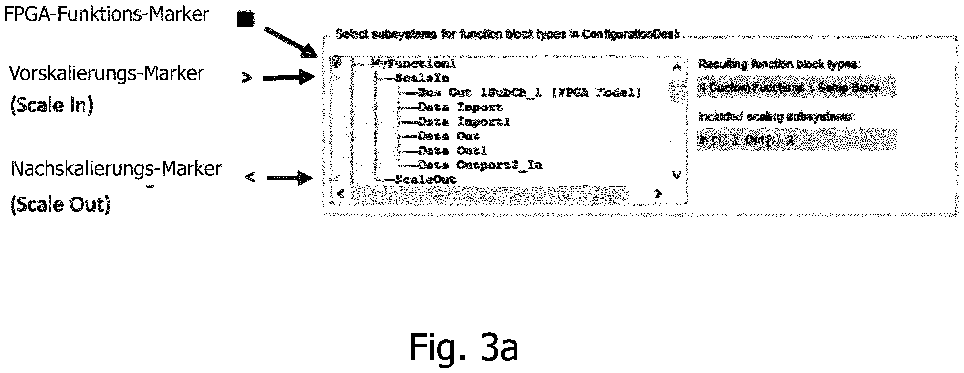

Die Fig. 3a bis 3g zeigen ein konkretes Anwendungsbeispiel und die Visualisierung des Verfahrens im Rahmen eines Konfigurationsprogramms. Als Konfigurationsprogramm wird exemplarisch ein Programm der Firma dSPACE herangezogen.

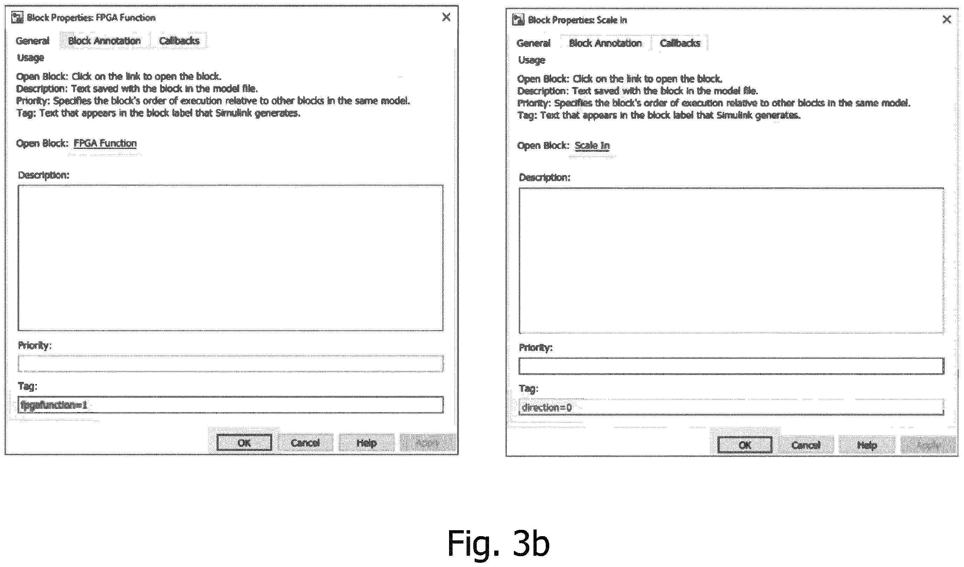

Zur Umsetzung des Modellierungsansatzes kann der Anwender sowohl FPGA-Funktionen bzw. das FPGA-Untersystem 5 (vgl. Fig. 2) als auch Skalierungs-Untersysteme 6, 7 (vgl. Fig. 2) für das Vorskalieren und Nachskalieren kennzeichnen. Dieses erfolgt entweder GUI gestützt, beispielsweise mittels Marker, wie in Fig. 3a dargestellt, wobei die Subsysteme 6, 7 intern entsprechend gekennzeichnet werden, oder manuell, wie Fig. 3b gezeigt.

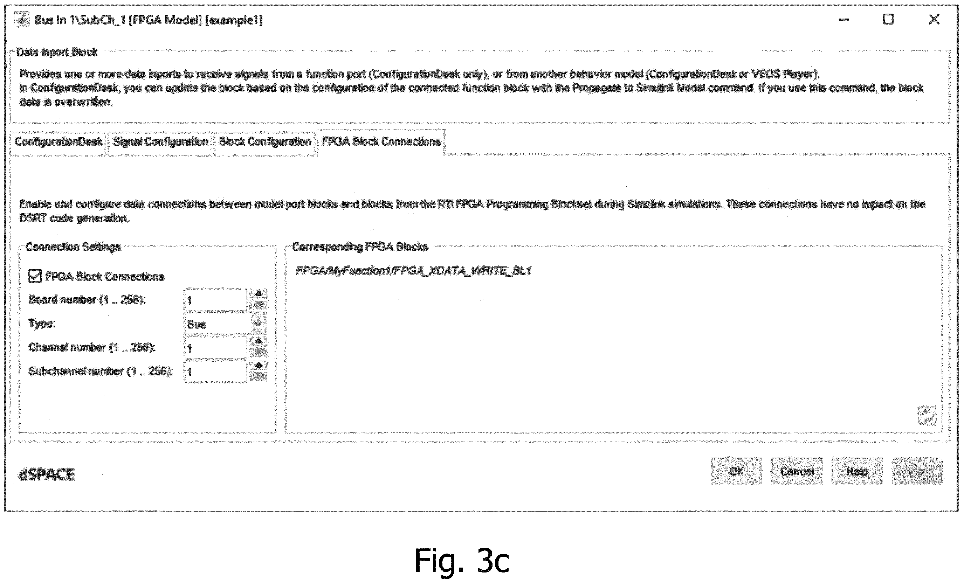

Die Skalierungs-Untersysteme 6, 7 besitzen sowohl interne Interfaces für einen Datenfluss innerhalb des FPGA-Modells 1 zwischen den Skalierungs-Untersystemen 6, 7 und dem FPGA-Untersystem 5 als auch externe Interfaces für einen Datenfluss von dem FPGA-Modell 1 in Richtung Prozessormodell 3. Diese sind entsprechend zu kennzeichnen. Da es sich bei den Skalierungs-Untersystemen 6, 7 um Prozessormodelle handelt, kommen für Interfaces die dSPACE Modell Port Blöcke zum Einsatz. Die Richtung zum FPGA wird dadurch gekennzeichnet, dass im Modellportblock der dazu korrespondierende dSPACE FPGA Programming Blockset Interfaces Block als "FPGA Block Connection" konfiguriert wird, wie Fig. 3c zeigt. In dem Beispiel hat der korrespondierende FPGA interne Block die Bordnummer 1, ist vom Typ Bus-Interfaces und nutzt Sub-Channel 1 von Kanal 1. Auch wenn es hier nicht dargestellt ist, kann ein Skalierungs-Untersystem 6, 7 prinzipiell auch Interfaces enthalten, die nicht der Datenflussrichtung entsprechen. Also z.B. ein Interface Richtung Prozessor im Vorskalierungs-Untersystem 6. Sie werden dann allerdings nicht in der korrekten Reihenfolge vor oder nach der Task ausgeführt, denn: beim Transfer von FPGA zu Prozessor wird das Skalierungs-Untersystem vor der Prozessortask und beim Transfer vom Prozessor zum FPGA nach der Prozessor Task ausgeführt.

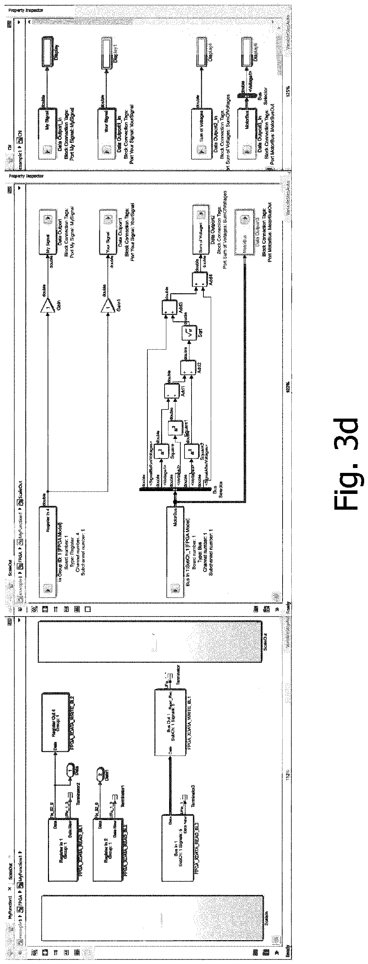

Fig. 3d zeigt exemplarisch den Datenfluss für die Richtung FPGA zu Prozessor. In der FPGA-Funktion "MyFunction1" werden Ergebnisse des FPGA-Anteils (links) auf die FPGA Interface Blöcke Register Out 4 und Bus Out 1 geschrieben. Im Skalierungs-Untersystem "ScaleOut" (Mitte) werden die Daten vom FPGA-Anteil durch zwei Interface Blöcke empfangen, deren Block Connections auf die beiden FPGA Output Interfaces konfiguriert wurden. Dies ist in der Darstellung an den aufgelisteten Attributen unterhalb der Blöcke zu erkennen, die die Boardnummer, Kanaltyp, Kanal- und Sub-Kanalnummer anzeigen. Die anderen Interfaces bilden das externe Interface und werden später in der weiterverarbeitenden zweiten Anwendung das einzig sichtbare Interface sein. Es erfolgt nun das Nachverarbeiten in dem "ScaleOut" Untersystem, bei dem die Berechnung der "Sum of Voltages" einen typischen Nachverarbeitungsfall darstellt. Die vier externen Interfaces können vom Prozessormodell "CN" (rechts) später verwendet werden. Das Prozessormodell "CN" (rechts) ist für die FPGA-Gesamtfunktion nicht relevant und ist auch nicht Bestandteil des FPGA Build Results.

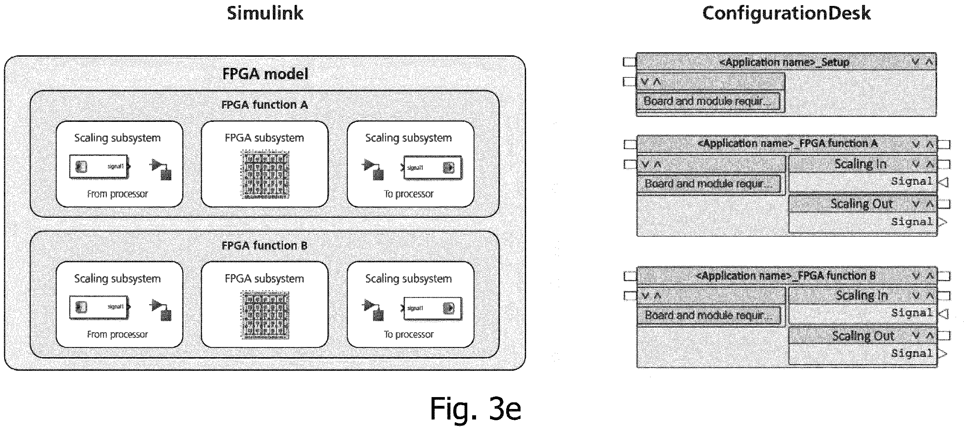

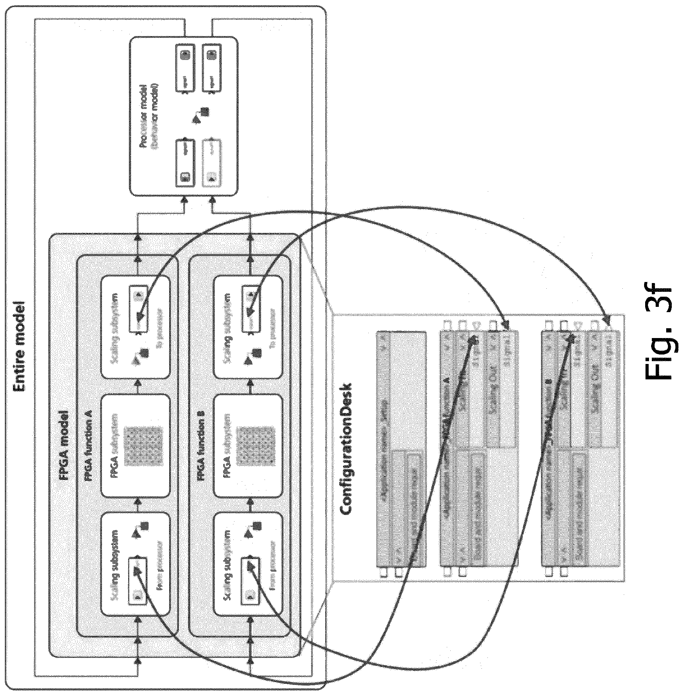

Die Fig. 3e und 3f zeigen die Weiterverwendung des Build Results in einer zweiten Anwendung. Das FPGA Build Result des FPGA-Modells 1 (links) wird in der ersten Anwendung The MathWorks^{®} Simulink erzeugt und für die Konfigurations- und Implementierungssoftware dSPACE ConfigurationDesk^{®} bereitgestellt. Die FPGA-Containerdateien werden durch dSPACE ConfigurationDesk^{®} unterstützt und dort Fig. 3e (rechts) angezeigt.

Das genaue Mapping der Interface Ports der Skalierungs-Untersysteme aus dem Beispiel FPGA-Modell auf die FPGA-Funktion des Build Results, wie ConfigurationDesk^{®} es anzeigt, ist in Fig. 3f mit Pfeilen eingezeichnet. In dieser Darstellung ist sofort zu sehen, dass in der weiterverarbeitenden Anwendung nur die externen Interfaces präsentiert werden. Die FPGA-Gesamtfunktionalität 2 der einzelnen FPGA-Funktionen sind somit komplett gekapselt. Es wird ein einfaches, stabiles Interface Richtung Prozessormodell des Anwenders bereitgestellt.

Die Datenports, die in dem Beispiel von Fig. 3e (rechts) in allen FPGA-Funktionen exemplarisch "Signal1" heißen, können in der weiterverarbeitenden Anwendung wie z.B. dSPACE ContigurationDesk^{®} an einen Interfaceblock eines Prozessormodells angeschlossen werden. Alle Datenports eines Skalierungs-Untersystems müssen in Configuration-Desk^{®} an dieselbe Task angeschlossen werden, ansonsten wird ein Check einen Konflikt werfen. Die Verbindung zu einer Task legt fest, dass auch das Skalierungs-Untersystem in dieser Task ausgeführt wird, beim Transfer von FPGA zu Prozessor vor der Prozessortask und beim Transfer vom Prozessor zum FPGA nach der Prozessor Task.

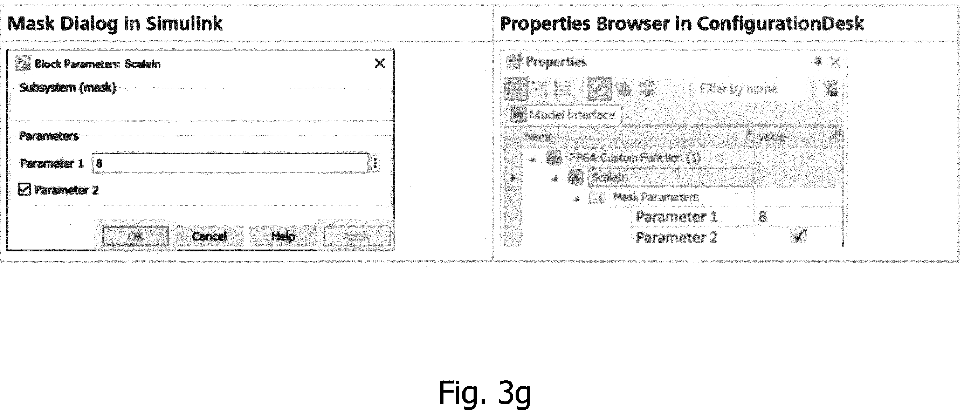

Fig. 3g zeigt, dass die Maskenparameter der Skalierungs-Untersysteme als Init Werte im Build Result angelegt werden. Diese angelegten Parameter werden vom Konfigurationstool der Echtzeitanwendung dSPACE ConfigurationDesk^{®} automatisch als Konfigurationsparameter einstellbar angeboten. Ferner werden sie über die Memory Map der Echtzeitapplikation einem Experimentiertool wie z.B. dSPACE ControlDesk^{®} oder XIL API zu Manipulation zur Laufzeit angeboten.

Da Maskenparameter von den darunterliegenden Skalierungs-Untersystemen Prozessorblöcken als Variablen verwendet werden können, sind die Untersysteme dadurch individuell parametrisierbar.

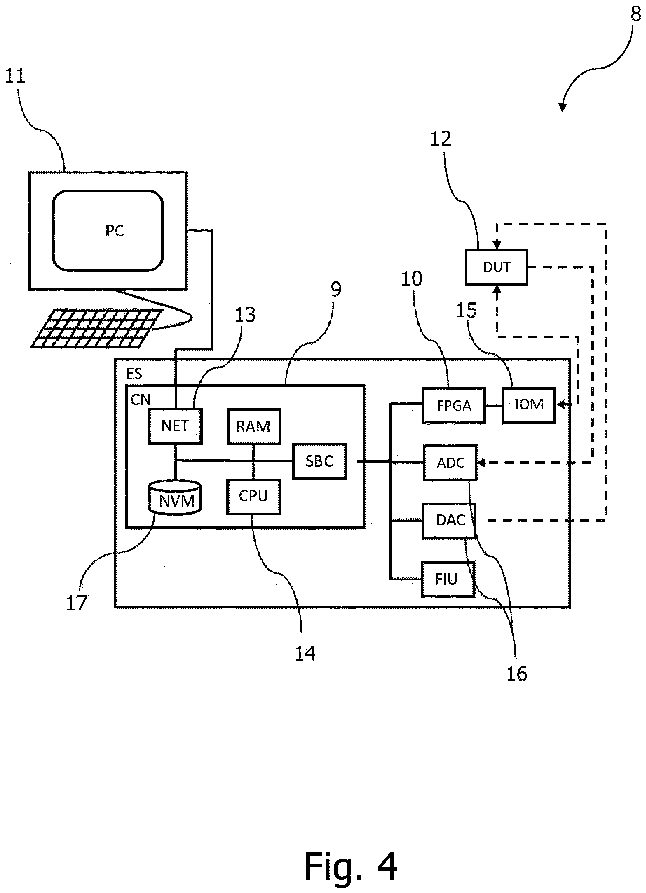

Aus Fig. 4 ist ein Simulationssystem 8 zum Testen eines Testobjektes 12 (engl. device under test, DUT) ersichtlich. Das Simulationssystem 8 umfasst neben dem Testobjekt 12 einen Bedienrechner 11 (engl. personal computer, PC), einen Echtzeitrechner 9 (engl. computing node, CN) sowie einen FPGA 10. Das Testobjekt 12 kann beispielsweise ein zu testendes Steuergerät sein.

Mit dem Bedienrechner 11 wird das Prozessormodell modelliert und auf dem Prozessor initialisiert sowie die FPGA-Anwendung heruntergeladen. Der Bedienrechner 11 ist über ein Netzwerkmodul 13 (engl. network, NET) mit dem Echtzeitrechner 9 verbunden.

Der Echtzeitprozessor 14 (engl. control processing unit, CPU) des Echtzeitrechners 9 führt die Prozessoranwendung aus. Auf dem nichtflüchtigen Speichermedium 17 (engl. nonvolatile memory, NVM) des Echtzeitrechners 9 werden die passenden Befehle gespeichert.

Der Echtzeitprozessor 14 initiiert das Senden und Empfangen von Daten zum bzw. vom FPGA 10 über einen boardspezifischen Bus. Der Echtzeitprozessor 14 kann auch an seine eigenen I/O-Kanäle angeschlossen werden, um I/O-Funktionalität unabhängig vom FPGA 10 bereitzustellen.

Der FPGA 10 verarbeitet die FPGA-Anwendung (FPGA-Logikimplementierung). Der FPGA 10 ist mit seinen eigenen I/O-Kanälen 15 (engl. input-output-module, IOM) verbunden, um I/O-Signale unabhängig vom Echtzeitprozessor 14 zu verarbeiten. Wenn der Echtzeitprozessor 14 den Datenaustausch initiiert, sendet und empfängt der FPGA 10 Daten an bzw. von einem boardspezifischen Bus.

Um auf die externen I/O-Signale des Testobjektes 12 zugreifen zu können, müssen die Signale so umgewandelt werden, dass sie den Anforderungen der angeschlossenen Komponenten entsprechen. Dies geschieht z. B. durch Filter, Signalverstärker oder Analog-Digital-Wandler 16 (engl. analog-to-digital-converter, ADC bzw. digital-to-analog-converter, DAC).

### Bezugszeichenliste

- 1: FPGA-Modell
- 2: FPGA-Gesamtfunktionalität
- 3: Prozessormodell
- 4: Gesamtmodell
- 5: FPGA-Untersystem
- 6: Vorskalierungs-Untersystem
- 7: Nachskalierungs-Untersystem
- 8: Simulationssystem
- 9: Echtzeitrechner
- 10: FPGA
- 11: Bedienrechner
- 12: Testobj ekt
- 13: Netzwerkmodul
- 14: Echtzeitprozessor
- 15: Input-Output-Modul
- 16: Converter
- 17: Nichtflüchtiges Speichermedium

## Patentansprüche

1. Verfahren zum Erstellen und Bereitstellen eines FPGA Build Results eines FPGA-Modells (1) mit wenigstens einer FPGA-Gesamtfunktionalität (2), wobei die FPGA-Gesamtfunktionalität (2) ein FPGA-Untersystem (5), ein Vorskalierungs-Untersystem (6) und ein Nachskalierungs-Untersystem (7) umfasst, mit folgenden Verfahrensschritten:
a) Kennzeichnen des FPGA-Untersystems (5), wobei mittels des FPGA-Untersystems (5) die FPGA-Funktionalität eines FPGA-Modells (1) konfigurierbar ist,
b) Kennzeichnen des Vorskalierungs-Untersystems (6) und des Nachskalierungs-Untersystems (7) eines FPGA-Modells (1) zur Ausführung auf einem Prozessor,
c) Kennzeichnen von internen und externen Schnittstellen in dem Vorskalierungs-Untersystem (6) und Nachskalierungs-Untersystem (7), wobei die internen Schnittstellen einen Datenfluss innerhalb des FPGA-Modells (1) und die externen Schnittstellen einen Datenfluss von dem FPGA-Modell (1) weg gewährleisten,
d) Generieren der FPGA-Gesamtfunktionalität (2),
e) Generieren des FPGA Build Results anhand der generierten FPGA-Gesamtfunktionalität (2), wobei das FPGA Build Result eine einzelne Gesamtcontainer-Datei umfasst,
f) Bereitstellen des FPGA Build Results an eine weitere Anwendung zum Bestimmen einer Funktionalität eines das FPGA-Modell (1) und das Prozessormodell (3) umfassendes Gesamtmodell (4).

2. Verfahren nach Anspruch 1, wobei das Generieren der FPGA-Gesamtfunktionalität folgenden Verfahrensschritt umfasst:
A) Durchführen wenigstens eines Konsistenzchecks des Vorskalierungs-Untersystems und des Nachskalierungs-Untersystems.

3. Verfahren nach Anspruch 1 oder 2, wobei das Generieren der FPGA-Gesamtfunktionalität folgende Verfahrensschritte umfasst:
B) Generieren eines FPGA-Bitstroms für das FPGA-Untersystem,
C) pro Skalierungs-Untersystem Generieren eines Skalierungs-Prozessorcodes, und
D) Inkludieren des FPGA-Bitstroms und der Skalierungs-Prozessorcodes jeweils als Subcontainer-Datei in der Gesamtcontainer-Datei des FPGA Build Results.

4. Verfahren nach dem vorherigen Anspruch, wobei die Subcontainer-Datei eines Skalierungs-Untersystems den Skalierungs-Prozessorcode, eine Daten-Interface Beschreibung und/oder Make Files umfasst.

5. Verfahren nach dem vorherigen Anspruch, wobei der Skalierungs-Prozessorcode einen C-Code, einen C++-Code oder einen kompilierten Objektcode umfasst.

6. Verfahren nach Anspruch 3, wobei das Generieren des FPGA-Bitstroms folgende Verfahrensschritte umfasst:
I) Generieren eines Codes einer vorbestimmten Hardwarebeschreibungssprache, insbesondere eines VHDL-Codes, aus dem FPGA-Modell,
II) Synthetisieren eines Codes der vorbestimmten Hardwarebeschreibungssprache, insbesondere eines VHDL-Codes, aus einem FPGA-Anwendermodell zum Erhalten einer anwendermodellspezifischen Netzliste,
III) Synthetisieren eines FPGA-Frameworks,
IV) Hinzufügen der anwendermodellspezifischen Netzliste zu dem synthetisierten FPGA-Framework,
V) Implementieren des die anwendermodellspezifischen Netzliste umfassenden FPGA-Frameworks und Generieren des FPGA-Bitstroms.

7. Verfahren nach einem der Ansprüche 1 oder 3, die Gesamtcontainer-Datei aufweisend Metadaten, den FPGA-Bitstrom, eine Interface-Beschreibung zum Spezifizieren von Verbindungen der Interfaces und die Subcontainer der Skalierungs-Untersysteme.

8. Verwendung eines mittels des Verfahrens nach einem der vorherigen Ansprüche erstellten FPGA Build Results für eine weitere Anwendung zum Bestimmen einer Funktionalität eines das FPGA-Modell und ein Prozessormodell umfassendes Gesamtmodells.

9. FPGA-Modell (1) mit wenigstens einer FPGA-Gesamtfunktionalität (2) für ein das FPGA-Modell und ein Prozessormodell (3) umfassendes Gesamtmodell (4) zum Bestimmen einer Funktionalität des Gesamtmodells (4), die FPGA-Gesamtfunktionalität (2) aufweisend
ein mehrere Logikzellen umfassendes FPGA-Untersystem (5) zum Bestimmen der FPGA-Funktion,
ein Vorskalierungs-Untersystem (6) zum Vorverarbeiten mindestens eines von dem Prozessormodell (3) für das FPGA-Untersystem (5) bereitgestellten Datensignals, und
ein Nachskalierungs-Untersystem (7) zum Vorverarbeiten mindestens eines von dem FPGA-Untersystem (5) für das Prozessormodell (3) bereitgestellten Datensignals.

10. Nichtflüchtiges, computerlesbares Speichermedium (17) mit darauf abgespeicherten Befehlen, die bei ihrer Ausführung auf einem Prozessor ein Verfahren nach einem der Ansprüche 1 bis 8 bewirken.

11. Verfahren zum Betreiben eines Simulationssystems (8) zum Testen eines Testobjektes (12), das Simulationssystem (8) aufweisend einen Echtzeitrechner (9), einen FPGA (10) und einen Bedienrechner (11), wobei der Echtzeitrechner (9) ein Prozessormodell (3) simuliert und der FPGA (10) über ein FPGA-Modell (1) nach Anspruch 9 und erstellt nach einem der Ansprüche 1 bis 8 simuliert.
